# FASCICULE DE BREVET EUROPEEN

(11) **EP 1 382 011 B1**
(45) Date de publication et mention de la délivrance du brevet: **21.02.2007**
(21) Numéro de dépôt: 02727693.0
(22) Date de dépôt: 25.04.2002
(51) Int. Cl.: G06K 19/077

(54) **COUVERTURE INCORPORANT UN DISPOSITIF D'IDENTIFICATION RADIOFREQUENCE**
ABDECKUNG MIT RADIOFREQUENZIDENTIFIKATIONSGERÄT
COVER INCORPORATING A RADIO FREQUENCY IDENTIFICATION DEVICE

(30) Priorité: 26.04.2001 FR 0105616
(43) Date de publication de la demande: 21.01.2004
(60) Demande divisionnaire: 06022214.8
(73) Titulaire: Arjo Wiggins Security SAS, 92130 Issy les Moulineaux (FR)
(72) Inventeur: RANCIEN, Sandrine, F-38140 La Murette (FR); MAYADE, Thierry, F-73520 Saint-Beron (FR)
(74) Mandataire: Tanty, François
(86) Numéro de dépôt international: PCT/FR2002/001423
(87) Numéro de publication internationale: WO 2002/089052

(56) Documents cités:
- WO-A-00/26856
- WO-A-00/42569
- US-A- 5 786 626

## Description

La présente invention concerne des structures multicouches telles que des couvertures de livrets ainsi que leurs procédés de fabrication.

Les papiers couvertures des livrets délivrés par les administrations subissent des chocs mécaniques et thermiques très variés, que ce soit lors de leur fabrication ou lors de leur utilisation. Ces papiers couvertures ont subi le plus souvent une opération de grainage destinée à leur donner un aspect de surface attractif. Lors de cette opération de grainage, la couverture passe entre deux rouleaux d'embossage où elle est soumise à une pression relativement importante, de l'ordre d'une centaine de bars (10⁷ Pa).

De plus, ces papiers couvertures des livrets ont subi dans certains cas aussi une opération d'enjolivure par application d'un «foil » métallisé ou holographique par une opération dite de transfert à chaud et sous pression. Lors de cette opération de dépôt de «foil», la couverture passe dans une presse où elle est soumise à une pression relativement importante et à une température relativement élevée.

En outre, dans le cas particulier du passeport, le livret comprend un cahier constitué d'un ensemble de feuillets comportant une page de garde qui sera contrecollée sur la face intérieure du volet avant de la couverture et un film transparent destiné à être transféré à chaud sur une des pages intérieures ou sur la page de garde pour protéger les mentions variables qui y ont été inscrites préalablement. Lors de l'opération de transfert, le passeport est introduit dans un laminateur entre deux rouleaux chauffés, et la couverture est soumise une nouvelle fois à une pression non négligeable. La température à laquelle la couverture est exposée peut atteindre 130°C pendant plusieurs secondes.

Bien entendu, le passeport doit par ailleurs présenter une durée de vie de plusieurs années, en particulier de dix ans en Europe, et doit notamment posséder les qualités de résistance à la circulation suffisantes.

Pour répondre aux contraintes mentionnées ci-dessus, certaines couvertures destinées aux passeports sont actuellement fabriquées en imprégnant d'un polymère jusqu'à saturation un support cellulosique de 200 µm d'épaisseur, puis en déposant par enduction à la râcle, sur l'une de ses faces, une couche de recouvrement de 50 µm d'épaisseur, à base de polymères et de colorants, pouvant comporter des micro-billes expansées. Un vernis peut ensuite être appliqué sur la couche déposée par enduction pour conférer notamment de la brillance à la couverture et une certaine résistance mécanique à la rayure ou à l'abrasion.

Par ailleurs, on a cherché à renforcer la sécurité des passeports, notamment en les munissant d'un dispositif d'identification radio-fréquence (RFID), comme décrit dans le brevet US 5 528 222. Ce brevet décrit un complexe qui comprend une puce et une antenne, ce complexe étant ensuite inséré par exemple dans le volet avant de la couverture du passeport. Ce brevet n'aborde toutefois pas de façon détaillée la manière dont le dispositif d'identification radio-fréquence est finalement intégré au passeport. Un premier inconvénient d'une telle couverture avec dispositif d'identification radio fréquence se situe dans l'absence d'homogénéité de l'épaisseur entre le volet avant et le volet arrière du passeport. Un second inconvénient vient du fait que l'insertion du complexe dans le passeport entraîne une opération de transformation supplémentaire sur la machine de montage des passeports.

La demande internationale WO 00/26856 mentionne également la possibilité de munir un passeport d'un dispositif RFID. La puce est mise en place dans une ouverture d'un film en polyimide ou polyester, et maintenue dans cette ouverture au moyen d'une résine.

La demande internationale WO 00/42569 décrit une étiquette comportant une couche expansible avec une cavité pour recevoir une puce, la cavité étant située au centre de l'étiquette.

Le brevet US 5 528 222 décrit une étiquette RFID.

Le passeport malais actuellement en circulation est muni d'un dispositif d'identification radio-fréquence. Ce dispositif d'identification est inséré dans le volet arrière du passeport lors de son montage, entre le papier couverture grainé et la page de garde du cahier de pages intérieures. Ce dispositif d'identification radiofréquence se présente sous la forme d'un complexe trijet comprenant une puce reliée à une antenne, tous deux supportés par un film polyester, lui-même inséré entre deux autres films polymère destinés à protéger la puce et l'antenne. Ce complexe présente une surépaisseur au niveau de la puce. L'insertion de ce complexe dans le volet arrière du passeport est à l'origine de deux types de surépaisseurs : différence d'épaisseur de 1650 µm entre le volet avant et le volet arrière du passeport, et différence d'épaisseur de 650 µm sur le volet arrière entre la zone où se trouve la puce et la zone où se trouve l'antenne. L'aspect d'un tel passeport attire de plus l'attention des falsificateurs potentiels sur la présence du dispositif RFID.

Il existe, enfin, des passeports de démonstration dans lesquels le dispositif d'identification radiofréquence constitué simplement d'un tag (support polyester sur lequel sont présents la puce et l'antenne) comme par exemple le dispositif de marque Tag It ® de la société TEXAS INSTRUMENTS, est inséré entre le papier couverture grainé et la page de garde du cahier, collée sur la couverture. La puce entraîne une surépaisseur locale de plus de 200 µm et sa présence se devine. De plus, elle demeure exposée aux chocs et aux contraintes subis par le passeport lors du transfert à chaud du film transparent, notamment.

On connaît par la demande internationale WO 00/42569 une étiquette incorporant un dispositif d'identification radiofréquence. Cette étiquette comporte une couche adhésive et une couche de recouvrement dans l'épaisseur de laquelle est logée la puce du dispositif d'identification radiofréquence. Cette dernière est reliée à une antenne imprimée. Une telle étiquette ne présente pas de surépaisseur au niveau de la puce, mais cependant elle n'est pas adaptée à constituer un dispositif de sécurité satisfaisant pour un passeport, car la présence de l'étiquette sur un des volets de la couverture du passeport entraînerait une différence d'épaisseur entre les deux volets. L'aspect d'un tel passeport attire également l'attention des falsificateurs potentiels sur la présence du dispositif RFID.

L'invention se propose de pallier aux inconvénients de l'art antérieur, notamment de fournir un papier couverture de livret comportant un dispositif d'identification radio fréquence, ne présentant aucune surépaisseur localisée, et de fournir un papier couverture de livret comportant un dispositif d'identification radiofréquence prêt à être monté dans un passeport sans opération supplémentaire pour le transformateur.

Il existe également un besoin pour disposer de livrets, notamment de passeports, qui soient esthétiques et dans lesquels le dispositif d'identification radiofréquence est suffisamment bien protégé pour garantir la fiabilité nécessaire pendant toute la durée de validité du livret, c'est-à-dire plusieurs années dans le cas d'un passeport.

La présente invention propose une structure multicouche selon la revendication 1. Notamment, le papier couverture doit être apte à subir les traitements de grainage et/ou d'enjolivure par dépôt d'un film ou « foil » par transfert à chaud et sous pression et/ou de lamination lors de dépôt des films de sécurité transparents sur les pages comportant les mentions variables du passeport.

L'invention permet d'obtenir un livret, notamment de passeport, dont la couverture soit esthétique et n'attire pas l'attention des falsificateurs potentiels sur le dispositif d'identification radiofréquence, car ne présentant pas de surépaisseur localisée et ayant, le cas échéant, un aspect grainé.

En outre, de par l'absence de surépaisseur localisée et la protection du dispositif d'identification radiofréquence, le papier couverture selon l'invention peut être utilisé lors de la fabrication du passeport de la même manière que les papiers couvertures conventionnels n'incorporant pas de dispositif d'identification radiofréquence, ce qui est très avantageux pour les administrations notamment.

Dans une réalisation particulière, la puce du dispositif d'identification radiofréquence est située à proximité de la pliure de la couverture du livret, de manière à se trouver dans une zone moins exposée aux contraintes, car partiellement rigidifiée par la pliure.

La structure multicouche peut comporter au moins une feuille ayant une base fibreuse, comportant une quantité plus ou moins importante de fibres naturelles et/ou synthétiques, notamment de cellulose. Cette base fibreuse peut contenir un matériau polymère choisi de manière à conférer à la structure multicouche, d'une part des propriétés de résistance à la déchirure pour résister aux conditions d'utilisation ultérieures et d'autre part des propriétés de résilience suffisantes pour protéger le dispositif d'identification radiofréquence des chocs mécaniques. Ce matériau peut être choisi par exemple dans la liste suivante : caoutchoucs naturels ou synthétiques, caoutchouc styrène butadiène, polybutadiène, copolymères butadiène-acrylonitrile, polymères acryliques, polychloroprène, et leurs mélanges.

Selon l'invention, la puce du dispositif d'identification radiofréquence est logée dans une couche de la structure multicouche qui présente une épaisseur supérieure ou égale à l'épaisseur de la puce et une résilience lui permettant, en cas de compression momentanée, de conserver une épaisseur supérieure ou égale à l'épaisseur de la puce, de manière à assurer la protection de celle-ci. Cette couche peut comporter une base fibreuse comportant une quantité plus ou moins importante de fibres naturelles et/ou synthétiques, notamment de cellulose, cette base comportant elle-même un matériau polymère choisi de manière à conférer à la structure multicouche les propriétés de résilience suffisantes pour protéger le dispositif d'identification radiofréquence des chocs mécaniques. Cette couche peut être aussi un matériau de base polymère uniquement, par exemple une enduction à base de PVC, éventuellement plastifié, avec éventuellement des agents d'expansion.

La structure multicouche peut comporter une couche d'un matériau à base polymère, apte au grainage. Ce polymère peut être choisi dans la liste suivante : polymères à base de PVC, éventuellement plastifié, de polyuréthanes ou d'élastomères naturels ou synthétiques, avec éventuellement des agents d'expansion, émulsions de PVC et de copolymère butadiène/acrylonitrile ou copolymère butadiène/acrylonitrile/styrène, et leurs mélanges.

L'invention a encore pour objet un passeport dont la couverture est constituée par une structure multicouche telle que définie plus haut.

L'invention a également pour objet divers procédés de fabrication d'une couverture telle que définie plus haut.

L'invention a notamment pour objet un procédé, selon la revendication 18.

On peut par exemple disposer le dispositif d'identification radiofréquence sur une face de la feuille puis enduire cette face de la feuille d'un mélange à base d'une résine liquide non gélifiée, l'épaisseur déposée étant supérieure à celle de la puce après séchage. La couche déposée par enduction peut être grainée après séchage.

On peut également déposer sur la face de la feuille portant le dispositif d'identification radiofréquence une résine à base d'un composant thermofusible, l'épaisseur déposée étant supérieure à l'épaisseur de la puce. On peut marquer à chaud l'enduction afin de créer un grain juste avant le séchage final.

Dans les exemples de procédés ci-dessus, la première feuille peut comporter une base fibreuse, notamment une base papier, et l'on peut saturer cette base fibreuse avec un matériau, notamment un polymère, par exemple un latex d'élastomère, permettant d'assurer la résistance au déchirement et la protection ultérieure du dispositif d'identification radiofréquence. Cette première feuille peut en outre être enduite par un mélange à base polymère, apte au grainage. Ce mélange à base polymère apte au grainage peut en variante être déposé par enduction après assemblage des première et deuxième feuilles. La deuxième feuille peut être imprégnée avec un polymère thermoplastique.

On peut encore, selon un autre procédé, réaliser une première feuille à partir d'une base fibreuse, de préférence saturée en latex, embosser cette première feuille de manière à créer une cavité ayant une forme adaptée à celle de la puce, réaliser une deuxième feuille à partir d'une base fibreuse, de préférence saturée par imprégnation ou précipitation en masse avec des résines synthétiques ou naturelles, déposer sur cette deuxième feuille une puce et une antenne et contrecoller cette deuxième feuille avec la première de manière à ce que la puce vienne se loger dans la cavité réalisée par l'embossage.

La puce et l'antenne peuvent être dans un exemple de mise en oeuvre de l'invention fixée sur un film de support, par exemple un film de polyester, avant d'être associées à une base fibreuse.

Lorsque l'antenne du dispositif d'identification RFID est réalisée avec une encre conductrice, celle-ci peut comporter un ou plusieurs agent d'infalsification, sous réserve bien entendu de la compatibilité avec l'encre utilisée.

D'autres caractéristiques et avantages de la présente invention ressortiront à la lecture de la description détaillée qui va suivre, d'exemples de mise en oeuvre non limitatifs, et à l'examen du dessin annexé, sur lequel :
- la figure 1 représente de manière schématique, en perspective, un passeport conforme à l'invention,
- la figure 2 représente le passeport de la figure 1, couverture à plat,
- la figure 3 est une coupe partielle et schématique selon III-III de la figure 2,
- la figure 4 illustre un premier exemple de procédé de fabrication de la couverture,
- la figure 5 illustre un deuxième exemple de procédé de fabrication de la couverture,
- la figure 6 est une coupe partielle et schématique représentant une cavité formée sur l'une des feuilles de la couverture du passeport, et
- la figure 7 est une coupe schématique et partielle d'une cavité réalisée par impression.

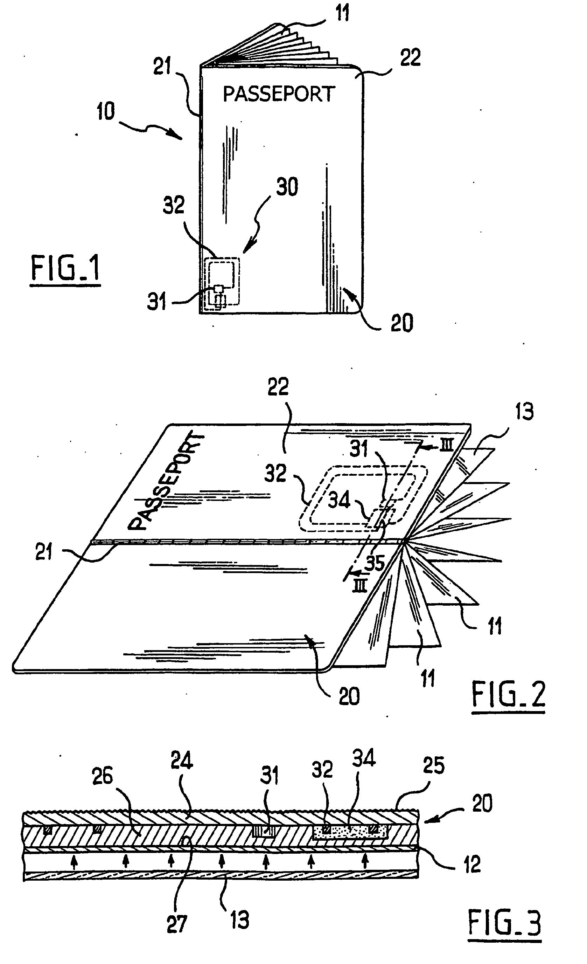

On a représenté sur les figures 1 à 3 un passeport 10 dont la couverture 20 est munie d'un dispositif d'identification radiofréquence 30, comportant une puce 31 et une antenne 32. De nombreux fabricants proposent actuellement des dispositifs d'identification radiofréquence susceptibles de convenir, de sorte que la puce 31 et l'antenne 32 ne seront pas décrites en détail, dans un souci de simplification de l'exposé. On peut citer notamment comme fabricants de puces adaptées, la société INSIDE TECHNOLOGIES, la société TEXAS INSTRUMENTS ou encore la société POLYMERE FLIP CHIP CORPORATION, cette liste n'étant pas limitative.

Dans une réalisation non illustrée, la puce intègre une antenne. Cela simplifie l'incorporation du dispositif d'identification radiofréquence dans la couverture du passeport mais présente l'inconvénient de réduire la portée de la liaison radio pouvant être établie avec un dispositif de lecture et/ou d'écriture.

La puce 31 se situe de préférence, comme on peut le voir sur les figures 1 et 2, à proximité de la pliure 21 de la couverture 20, par exemple dans une zone correspondant à un quart de la largeur du volet avant 22 ou arrière 24 de la couverture, mesurée à partir de la pliure 21.

Le passeport 10 comporte un cahier constitué d'un ensemble de feuillets 11 ayant une page de garde 12 collée sur le verso du volet avant 22 de la couverture. Cette page de garde 12 est destinée à recevoir une impression de mentions variables puis à être recouverte par un film ou « foil » transparent adhésif 13, appliqué par transfert à chaud.

Dans l'exemple des figures 1 à 3, la couverture 20 comporte une couche de support 24 dont une face est recouverte par une couche 25 d'un matériau apte au grainage, et la surface extérieure de la couverture 20 présente un grain.

L'autre face de la couche de support 24 porte la puce 31 et son antenne 32 et elle est recouverte par une deuxième couche 26, dans l'épaisseur de laquelle est logée la puce 31. La face 27 de la couche 26, opposée à la couche 24, constitue la surface intérieure de la couverture 20.

Lorsque l'antenne 32 est réalisée par impression sélective d'une encre conductrice sur la couche 24, et présente plusieurs spires, il peut être nécessaire de déposer localement un isolant 34 sur une portion des spires afin de pouvoir réaliser sur cet isolant un pont de liaison électrique 35, toujours par dépôt sélectif d'une encre conductrice, pour relier l'une des extrémités des spires à la puce 31. L'isolant 34 peut être déposé, par exemple, par impression sélective. La puce 31 peut être reliée à l'antenne 32 selon des procédés bien connus, notamment par le biais d'une colle conductrice, ou encore par thermo-compression ou par soudure.

L'épaisseur de la couche 26 est supérieure à l'épaisseur de la puce 31, de sorte que cette dernière est protégée des chocs à la fois par la couche 26 et par la couche 24.

L'épaisseur de la couche 26 est suffisamment grande, pour qu'en cas de compression de la couverture durant les traitements d'enjolivure et de confection du passeport, la couche 26 conserve une épaisseur supérieure à celle de la puce 31. Ainsi, compte tenu des matériaux utilisés pour réaliser les couches 24 et 26 et des épaisseurs de ces dernières, la couverture est capable de subir les traitements conventionnels de grainage et de transfert à chaud du film 13 sur la page de garde 12.

D'une manière générale, la couverture 20 peut être réalisée de multiples manières, et les couches 24 et 26 peuvent présenter des constitutions différentes, et comportent une base fibreuse. Ainsi, la structure multicouche illustrée à la figure 3 n'est nullement limitative de l'invention.

On va maintenant donner divers exemples de fabrication de la couverture.

### Exemple 1

On commence par réaliser une première feuille ayant une base papier (fibres de cellulose avec ou sans fibres synthétiques), que l'on sature en latex de copolymère styrène-butadiène pour assurer la résistance au déchirement et la protection ultérieure du dispositif d'identification radiofréquence.

On dépose ensuite sur une face de cette première feuille, après séchage, la puce et l'antenne du dispositif d'identification radiofréquence, par un procédé conventionnel. On peut notamment réaliser l'antenne par sérigraphie au moyen d'une encre conductrice, puis établir les connexions électriques avec la puce par thermo-compression. Le cas échéant, on dépose un isolant sur une partie des spires et l'on réalise sur cet isolant un pont de liaison électrique entre une extrémité des spires et la puce.

A ce stade de la fabrication, sur l'une des faces de la première feuille, il y a une surépaisseur au niveau de l'antenne de l'ordre de 30 µm et au niveau de la puce de l'ordre de 200 µm. L'épaisseur de la première feuille peut être de l'ordre de 200 µm ailleurs, par exemple.

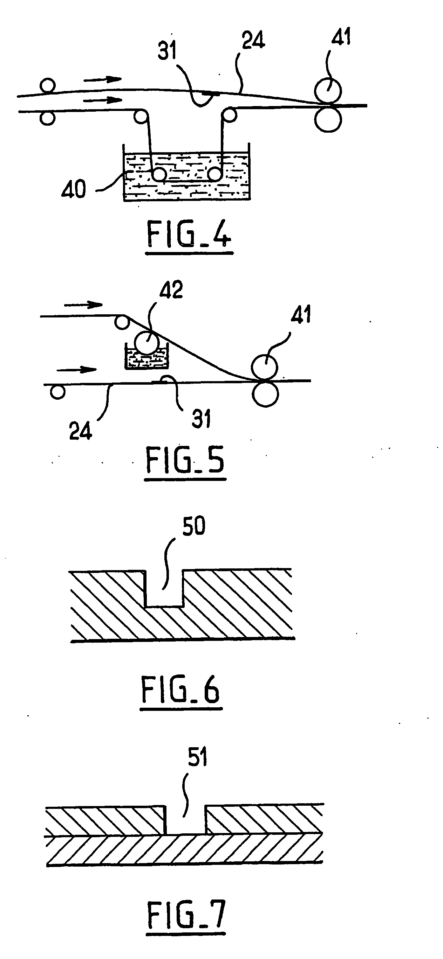

On a représenté sur la figure 4, schématiquement, la première feuille ainsi formée, avec la puce 31 fixée dessus.

Par ailleurs, on imprègne avec un mélange à base de polymère(s), par exemple de styrène-butadiène, un papier de type buvard, d'épaisseur supérieure à celle de la puce, en le faisant passer dans un bain d'imprégnation 40 pour former une deuxième feuille. L'épaisseur de cette deuxième feuille peut être de l'ordre de 300 µm, par exemple.

Ensuite, on fait passer entre deux rouleaux 41 le papier de type buvard, humide saturé en polymère(s) et la première feuille préalablement fabriquée, avec le dispositif d'identification radiofréquence sur sa face intérieure.

Lors de l'opération d'essorage, les deux feuilles se lient grâce au mélange à base de polymère(s) dont a été imprégné le papier de type buvard et ce dernier épouse le relief de la puce du fait de sa compressibilité à l'état humide. Ainsi, à l'emplacement de la puce, sous l'effet de la pression des rouleaux 41, le matériau d'imprégnation est chassé et la puce s'enfonce dans le papier de type buvard.

On enduit ensuite le complexe ainsi formé, sur une face, par exemple la face extérieure de la première feuille, avec un mélange de polymères, afin de conférer une aptitude au grainage. L'épaisseur de la couche déposée par enduction est par exemple de 50 µm.

Un vernis d'impression (mat ou brillant) peut être appliqué sur la couche ainsi déposée, pour améliorer l'aspect de surface et la résistance à la circulation.

### Exemple 2

Dans ce deuxième exemple, on réalise une première feuille identique à celle de l'exemple précédent, portant le dispositif d'identification radiofréquence.

On amène un papier de type buvard, d'épaisseur supérieure à celle de la puce, par exemple de 300 µm d'épaisseur, au contact d'une encolleuse 42 pour imprégner l'une de ses faces d'un polymère tel qu'un polyacétate de vinyle, puis cette face ainsi enduite est amenée au contact de la première feuille, entre deux rouleaux 41, comme illustré à la figure 5.

Le papier de type buvard, saturé en polymère(s) et la première feuille préalablement fabriquée, portant le dispositif d'identification radiofréquence sur sa face intérieure, se lient, le papier de type buvard épousant le relief de la puce du fait de sa compressibilité à l'état humide.

On enduit ensuite le complexe ainsi formé sur l'une de ses faces, destinée à constituer la surface extérieure de la couverture, avec un mélange de polymères présentant une aptitude au grainage. L'épaisseur déposée par enduction, par exemple sur la face extérieure de la première feuille, peut être de l'ordre de 50 µm.

Comme dans l'exemple précédent, un vernis d'impression (mat ou brillant) peut être déposé pour améliorer l'aspect de surface et la résistance à la circulation.

### Exemple 3

On réalise une première feuille identique à celle des exemples précédents, portant le dispositif d'identification radiofréquence.

On fabrique une deuxième feuille 53 avec une base papier, représentée schématiquement à la figure 6, présentant un filigrane 50 en creux, de la forme de la puce 31. La profondeur du filigrane 50 est légèrement supérieure à l'épaisseur de la puce 31. L'épaisseur du papier est par exemple de l'ordre de 300 µm. La feuille 53 est de préférence saturée en polymère(s) pour assurer la protection ultérieure de la puce.

On contrecolle, après avoir repéré les emplacements de la puce 31 et du filigrane 50, la feuille 53 avec la première feuille précédemment réalisée, de manière à ce que la puce 31 vienne se loger dans le filigrane 50. Le collage peut se faire à froid ou à chaud. La feuille 53 étant encore humide, on passe le complexe ainsi formé entre deux rouleaux et l'on procède à son séchage.

On peut enduire la face du complexe destinée à constituer la surface extérieure du passeport avec un mélange de polymères présentant une aptitude au grainage et déposer sur cette enduction un vernis d'impression (brillant ou mat) afin d'améliorer l'aspect de surface et la résistance à la circulation.

### Exemple 4

On réalise une première feuille identique à celle des exemples précédents, portant le dispositif d'identification radiofréquence.

Une deuxième feuille est fabriquée avec un trou réalisé par gravure laser ou mécaniquement à l'emporte pièce, ce trou ayant une forme correspondant à celle de la puce et une épaisseur au moins supérieure à celle de la puce. Cette deuxième feuille peut éventuellement être saturée en polymère(s) pour assurer une protection ultérieure de la puce. La deuxième feuille présente par exemple une épaisseur de l'ordre de 200 µm.

On fabrique par ailleurs une troisième feuille, à partir d'une base papier, que l'on sature de préférence avec une ou plusieurs résines synthétiques ou naturelles, par exemple des latex élastomères, par imprégnation ou précipitation en masse, le matériau d'imprégnation étant choisi de manière à protéger le dispositif d'identification radiofréquence ultérieurement. Cette troisième feuille présente par exemple une épaisseur de l'ordre de 100 µm.

Ensuite, les trois feuilles sont contrecollées de manière repérée, la deuxième feuille étant appliquée sur la première feuille comportant la puce, cette dernière venant se loger dans le trou. La troisième feuille vient recouvrir la deuxième feuille du côté opposé à la première.

On enduit ensuite la face extérieure de la première feuille avec un mélange de polymères présentant une aptitude au grainage.

Eventuellement, un vernis d'impression (brillant ou mat) peut être déposé sur cette enduction pour améliorer l'aspect de surface et la résistance à la circulation.

### Exemple 5

On réalise une première feuille identique à celle des exemples précédents, portant le dispositif d'identification radiofréquence.

On enduit ensuite cette feuille à l'aide d'un racle, sur la face comportant la puce, avec un mélange type « plastisol » à base de PVC additionné de plastifiant et d'agent gonflant. On gélifie l'ensemble dans un four à tunnel à la température de l'ordre de 200°C. Les quantités de plastifiant et d'agent gonflant sont ajustées de façon à ce que l'enduction présente après gélification et refroidissement une compressibilité telle que l'épaisseur de la couche, lors d'un enfoncement ou après un enfoncement, reste supérieure à l'épaisseur de la puce, afin de protéger cette dernière. On dépose par exemple une épaisseur de l'ordre de 300 µm. La couche déposée par enduction peut être grainée après séchage. Cette couche, après gélification et refroidissement, apporte les caractéristiques mécaniques recherchées.

Un vernis d'impression (brillant ou mat) peut être déposé sur l'enduction pour améliorer l'aspect de surface et la résistance à la circulation.

### Exemple 6

On réalise une feuille identique à la première feuille des exemples précédents, portant le dispositif d'identification radiofréquence.

On enduit ensuite cette feuille sur la face portant le dispositif d'identification radiofréquence avec un mélange à base d'une résine dite *« hotmelt »,* comprenant une poudre thermofusible, par exemple du polyuréthane à l'aide d'un système d'extrusion adapté.

Le polymère retenu pour l'enduction est choisi de manière à présenter une compressibilité telle que l'épaisseur de la couche déposée par enduction, lors d'un enfoncement ou après enfoncement en cas de choc, reste supérieure à l'épaisseur de la puce, afin de protéger cette dernière. L'épaisseur déposée est par exemple de l'ordre de 300 µm.

On peut marquer à chaud l'enduction réalisée afin de créer le grain souhaité.

Ensuite, un vernis d'impression (brillant ou mat) peut être déposé sur la couche déposée par enduction, éventuellement grainée, pour améliorer son aspect de surface et la résistance à la circulation.

### Exemple 7

On réalise une première feuille à partir d'une base papier (fibres de cellulose avec ou sans fibres synthétiques), éventuellement saturée en latex, et l'on enduit une première face de cette base papier d'un mélange à base de polymères présentant une aptitude au grainage, puis on dépose éventuellement un vernis d'impression (brillant ou mat) sur cette enduction. L'épaisseur de la base papier est par exemple de l'ordre de 200 µm et l'épaisseur de la couche apte au grainage de l'ordre de 50 µm.

On réalise ensuite une cavité, de profondeur au moins supérieure à celle de la puce et ayant une forme adaptée à celle de la puce, par embossage mécanique sur la deuxième face de cette base papier.

Eventuellement, la première face est grainée simultanément.

Une seconde feuille est fabriquée par ailleurs, à partir d'une base papier qui est de préférence saturée par imprégnation ou précipitation en masse avec des résines synthétiques ou naturelles, par exemple des latex élastomères, visant à renforcer sa cohésion et à protéger ultérieurement le dispositif d'identification radiofréquence. L'épaisseur de cette seconde feuille est par exemple de 200 µm.

Sur cette seconde feuille, on dépose une puce et une antenne par un procédé conventionnel.

On contrecolle ensuite cette seconde feuille, portant la puce et l'antenne, sur la première feuille, de manière à ce que la puce vienne se loger dans la cavité réalisée par embossage.

Après contrecollage, le complexe formé est séché.

### Exemple 8

On réalise une première feuille comme dans l'exemple 7.

On réalise ensuite une cavité de profondeur sensiblement égale à la moitié de celle de la puce sur cette feuille, par embossage mécanique.

On réalise une deuxième feuille comme dans l'exemple 3, avec un filigrane dont l'épaisseur est sensiblement égale à la moitié de celle de la puce munie de son antenne, par exemple du type IC-Link ® de la société INSIDE TECHNOLOGIES.

On assemble ensuite les deux feuilles, la puce étant complètement logée dans les cavités en regard de chacune des feuilles.

### Exemple 9

On réalise une première feuille identique à celle de l'exemple précédent.

On munit ensuite la face de cette première feuille opposée à celle portant l'enduction du dispositif d'identification radiofréquence.

Pour ce faire, on peut commencer par déposer une encre conductrice, par exemple par sérigraphie, de façon sélective afin de former deux zones de connexion pour la puce et un pont de liaison électrique qui permettra de relier ultérieurement une extrémité de l'antenne à l'une desdites zones de connexion.

On dépose ensuite une encre isolante, par exemple par sérigraphie, de façon sélective, afin de former une réserve au niveau des zones de connexion et au niveau de l'extrémité du pont de liaison opposée à la zone de connexion correspondante.

On réalise les spires de l'antenne en déposant de l'encre conductrice, par exemple par sérigraphie. L'encre utilisée peut contenir des agents d'infalsification. L'antenne est connectée électriquement par l'une de ses extrémités à l'une des zones de connexion précitées et par l'autre extrémité à l'extrémité libre du pont de liaison électrique.

On dépose une couche isolante, par exemple par sérigraphie, de façon sélective, de façon à former une réserve d'une épaisseur au moins équivalente à celle de la puce et pouvoir loger celle-ci au sein de la structure finale sans créer de surépaisseur. L'épaisseur de la couche d'isolant déposée est par exemple de l'ordre de 300 µm. L'isolant peut être déposé en une ou plusieurs passes et peut comporter un agent d'expansion.

Après mise en place de la puce on procède, éventuellement, au dépôt d'une couche de protection facultative sur la couche d'isolant.

### Exemple 10

On commence par réaliser une première feuille identique à celle de l'exemple précédent.

Ensuite, on dépose par exemple par sérigraphie sur la face de cette première feuille opposée à celle qui a été enduite d'un mélange apte au grainage, une encre conductrice de manière à former les spires de l'antenne.

Après, on dépose de manière sélective une encre isolante 34, et l'on réalise le pont de liaison électrique 35 entre une extrémité des spires et une zone de connexion pour la puce. On procède alors au dépôt d'une couche isolante, par exemple par sérigraphie, de façon sélective, afin de former une réserve d'épaisseur au moins équivalente à celle de la puce.

Une fois la puce mise en place dans la cavité formée dans la couche isolante, on peut recouvrir celle-ci d'une couche de protection facultative.

### Exemple 11

On procède comme dans l'exemple 1, à la différence près que la puce et l'antenne sont portées par un support flexible de faible épaisseur tel qu'un film synthétique, un film de polyester par exemple.

Le film de support, portant la puce et l'antenne, est ensuite associé à une feuille de type buvard.

Dans les exemples 1 à 6, la première feuille peut être réalisée, en variante, dès l'origine avec une enduction apte au grainage et/ou recevoir un vernis d'impression.

D'une manière générale, le matériau saturant la base papier de la première feuille des exemples 1 à 10 ou la deuxième feuille des exemples 1 à 4, peut être une résine synthétique, naturelle, par exemple un élastomère ou un mélange de résines, ce matériau étant choisi afin d'apporter de la flexibilité, améliorer la résistance à la déchirure, la résistance à la déformation lors d'une compression et la résilience. On peut notamment utiliser comme polymère de type élastomère, des copolymères de styrène butadiène (SBR), du polybutadiène (BR), des copolymères butadiène-acrylonitrile (NBR), des polymères acryliques, du polychloroprène, des polyisoprènes, cette liste n'étant pas limitative.

Comme mélange à base de polymère(s) utilisable pour conférer l'aptitude au grainage, on peut citer certains polymères nitro cellulosiques, polyurethanes, acryliques ou vinyliques.

Comme polymères utilisable(s) pour constituer l'isolant des exemples 5 et 6, on peut citer les polymères thermoplastiques à base de PVC, de polyuréthanes et les élastomères naturels ou synthétiques. On peut notamment utiliser du PVC plastifié ou « plastisol », qui contient des plastifiants, par exemple des esters de l'acide pthalique, de l'acide odipique, de l'acide sébacique ou de l'acide phosphorique. On peut aussi utiliser des élastomères de polyuréthane. On peut encore mélanger une émulsion de PVC avec d'autres dispersions de copolymères butadiène/acrylonitrile ou copolymère budatiène/acrylonitrile/styrène, qui jouent le rôle d'agents plastifiants. On peut enfin introduire dans le polymère, notamment lorsque celui-ci est déposé par impression ou enduction, et comporte par exemple du PVC, des agents d'expansion fonctionnant par exemple par un procédé exothermique. Comme agents d'expansion, on peut citer notamment des produits comme le Génitron® à base d'azodicarbonanide ou de sulfohydrazide, qui après décomposition à la température donne des gaz tels que le monoxyde d'azote ou l'hydrogène, le dioxyde de carbone ou l'ammoniac, entraînant ainsi la création de cellules et le gonflement de l'enduction. On peut aussi utiliser comme agent d'expansion de l'eau, dans le cas d'un isolant de type polyuréthane fabriqué à partir de disocyanate de thylène, de polyester, et de polyether.

Dans les exemples 1 à 10, on peut remplacer la base papier par toute autre base fibreuse, notamment un non tissé.

Bien entendu, l'invention n'est pas limitée aux exemples de réalisation qui viennent d'être décrits.

La couverture peut subir des traitements d'enjolivure, notamment l'application par transfert à chaud et sous pression d'un film métallisé coloré ou holographique, ce film pouvant être déposé sur la couverture avant collage du cahier ou sur le livret après mise en place du cahier.

La couverture peut recevoir l'impression par héliogravure ou par sérigraphie d'un motif visible ou invisible, de sécurité ou non.

On peut réaliser l'intégration de la puce dans la couverture du passeport par d'autres procédés que ceux qui viennent d'être décrits, en fonction de la structure du dispositif d'identification radiofréquence.

La couverture peut comporter un nombre plus ou moins grand de couches différentes.

L'antenne peut être réalisée autrement que par sérigraphie, par exemple par transfert d'un film recouvert de pistes conductrices en cuivre réalisées par gravure.

L'invention n'est pas limitée aux passeports et s'applique également à la fabrication des livrets de famille ou d'épargne entre autres.

Sur les figures, les épaisseurs relatives réelles n'ont pas été respectées, dans un souci de clarté du dessin.

## Revendications

1. Structure multicouche formant une couverture de livret, notamment de passeport, la structure multicouche étant destinée à être pliée selon une pliure de la couverture, comportant un dispositif d'identification radiofréquence (31, 32) ayant une puce (31), les matériaux constituant les différentes couches de la structure multicouche étant choisis, ainsi que l'épaisseur desdites couches, de manière à ce que la couverture (20) soit résistante aux chocs mécaniques et thermiques, et puisse subir un traitement de grainage et/ou d'enjolivure par dépôt d'un film par transfert chaud et sous pression et/ou de lamination lors de dépôts de films de sécurité, la structure comportant au moins une couche ayant une base fibreuse, **caractérisée en ce que** la puce est logée, sans générer de surépaisseur, dans l'épaisseur d'une première couche (26) dont l'épaisseur est supérieure à celle de la puce (31), de sorte que cette dernière soit protégée des chocs à la fois par la première couche (26) et par une couche de support (24) dont une face est recouverte par la première couche (26), l'épaisseur de la première couche (26) étant suffisamment grande pour conserver durant une compression dudit traitement une épaisseur supérieure à celle de la puce (31).

2. Structure multicouche selon la revendication précédente, **caractérisée par le fait que** la puce (31) est située à proximité de la pliure (21).

3. Structure multicouche selon l'une des revendications 1 et 2, **caractérisée par le fait que** la base fibreuse est un buvard cellulosique ou un non tissé.

4. Structure multicouche selon la revendication précédente, **caractérisée par le fait que** la base fibreuse contient un matériau polymère choisi de manière à conférer à la structure multicouche, d'une part des propriétés de résistance à la déchirure et d'autre part des propriétés de résilience suffisantes pour protéger le dispositif d'identification radiofréquence des chocs mécaniques.

5. Structure multicouche selon la revendication précédente, **caractérisée par le fait que** ledit matériau polymère est choisi dans la liste suivante : caoutchoucs naturels ou synthétiques, caoutchouc styrène butadiène, polybutadiène, copolymères butadiène-acrylonitrile, polymères acryliques, polychloroprène, et leurs mélanges.

6. Structure multicouche selon l'une des revendications précédentes, **caractérisée par le fait que** la première couche (26) présente une résilience lui permettant, en cas de compression momentanée, de conserver une épaisseur supérieure ou égale à l'épaisseur de la puce.

7. Structure multicouche selon la revendication 6, **caractérisée par le fait que** la première couche (26) comporte une base fibreuse.

8. Structure multicouche selon la revendication ou 7, **caractérisée par le fait que** la première couche (26) comporte un matériau polymère choisi de manière à conférer à la structure multicouche des propriétés de résilience suffisantes pour protéger le dispositif d'identification radiofréquence des chocs mécaniques.

9. Structure multicouche selon l'une quelconque des revendications précédentes, **caractérisée par le fait qu'**elle comporte une couche d'un matériau à base polymère, apte au grainage, notamment choisi dans la liste suivante : polymères à base de PVC, éventuellement plastifié, de polyuréthanes ou d'élastomères naturels ou synthétiques, avec éventuellement des agents d'expansion, émulsions de PVC et de copolymère butadiène/acrylonitrile ou copolymère butadiène/acrylonitrile styrène, et leurs mélanges.

10. Structure multicouche selon l'une quelconque des revendications précédentes, **caractérisée par le fait que** le dispositif d'identification radiofréquence comporte une antenne sérigraphiée.

11. Couverture de livret comportant une structure multicouche telle que définie dans l'une quelconque des revendications 1 à 10.

12. Couverture selon la revendication précédente, **caractérisée par le fait qu'**une face de la couche de support (24) est recouverte par une deuxième couche (25) d'un matériau apte au grainage, la surface extérieure de la couverture (20) présentant un grain.

13. Couverture selon l'une des revendications 11 et 12, comportant un film métallisé coloré ou holographique appliqué par une opération d'enjolivure, notamment par transfert à chaud et sous pression.

14. Couverture selon l'une quelconque des revendications 11 à 13, comportant une impression par héliogravure ou par sérigraphie d'un motif visible ou invisible.

15. Livret comportant une couverture telle que définie dans l'une quelconque des revendications 11 à 14, et un ensemble de feuillets (11) avec une page de garde (12) collée sur le verso du volet avant de la couverture.

16. Livret selon la revendication précédente, la page de garde (12) étant destinée à recevoir une impression de mentions variables et à être recouverte par un film transparent adhésif.

17. Livret selon l'une des revendications 15 et 16, étant un passeport.

18. Procédé pour fabriquer une structure multicouche telle que définie dans l'une quelconque des revendications 1 à 10, comportant l'étape suivante:
- disposer le dispositif d'identification radiofréquence sur une première feuille,
et l'une des étapes suivantes :
a) - assembler cette première feuille sur une deuxième feuille de manière à obtenir une épaisseur résultante sensiblement constante, la deuxième feuille étant suffisamment compressible au moment de l'assemblage pour accueillir la puce dans son épaisseur, ou
b) - contrecoller cette première feuille avec une deuxième feuille, la puce du dispositif d'identification radiofréquence étant située sur l'intérieur de la première feuille, un trou ou une cavité étant réalisé sur la deuxième feuille, ce trou ou cette cavité ayant une forme adaptée à recevoir la puce, la puce étant mise en place dans ledit trou ou cavité lors du contrecollage desdites feuilles, ou
c)- réaliser une deuxième feuille avec un trou ayant une forme adaptée à contenir la puce,
- fabriquer une troisième feuille,
- assembler par contrecollage les trois feuilles de façon à ce que la deuxième feuille soit placée en sandwich entre la première feuille et la troisième feuille et à ce que la puce soit logée dans le trou de la deuxième feuille, ou
d) - une enduction ayant été réalisée avant la mise en place du dispositif d'identification radiofréquence _avec une réserve sous forme d'une cavité ayant une forme adaptée à contenir la puce sur la première feuille et le dispositif d'identification radiofréquence disposé dans cette cavité sur la première feuille,
- réaliser une enduction sur la feuille du coté du dispositif d'identification radiofréquence de façon à protéger ce dernier, ou
e) - déposer sur la première feuille une enduction supérieure à l'épaisseur de la puce,
dans les étapes a) à e), l'épaisseur de la deuxième feuille ou de l'enduction étant supérieure à celle de la puce et suffisamment grande pour conserver, durant une compression d'un traitement de grainage et/ou d'enjolivure par dépôt d'un film par transfert à chaud et sous pression et/ou de lamination lors de dépôts de films de sécurité, une épaisseur supérieure à celle de la puce.

19. Procédé selon la revendication précédente, **caractérisé par le fait que** l'on réalise b) et que la première feuille comporte également une cavité dans laquelle est partiellement logée la puce.

20. Procédé selon l'une des deux revendications précédentes, **caractérisé par le fait que** l'on réalise la deuxième feuille avec un filigrane (50) en creux dont 1a profondeur est supérieure à l'épaisseur de la puce (31), **par le fait que** l'on dispose la puce sur la première feuille et **par le fait que** l'on contrecolle la deuxième feuille avec la première feuille, de manière à ce que la puce (31) vienne se loger dans le filigrane (50).

21. Procédé selon la revendication 18, **caractérisé par le fait que** l'on réalise e), le dispositif d'identification radiofréquence étant déposé sur une face de la feuille et que cette face de la feuille enduite d'un mélange à base d'une résine liquide non gélifiée, l'épaisseur déposée étant supérieure à celle de la puce.

22. Procédé selon la revendication précédente, **caractérisé par le fait que** la couche déposée par enduction est grainée après séchage.

23. Procédé selon la revendication 18, **caractérisé par le fait que** l'on réalise e), et que l'on dépose sur la face de la feuille portant le dispositif d'identification radiofréquence, une résine à base d'un composant thermofusible, l'épaisseur déposée étant supérieure à l'épaisseur de la puce.

24. Procédé selon la revendication précédente, **caractérisé par le fait que** l'on marque à chaud l'enduction afin de créer un grain.

25. Procédé selon l'une quelconque des revendications 18 à 24, **caractérisé par le fait que** la première feuille comporte une base fibreuse, notamment une base papier, **par le fait que** l'on sature cette base fibreuse avec un matériau, notamment un latex d'élastomère, permettant d'assurer la résistance au déchirement et la protection ultérieure du dispositif d'identification radiofréquence, et **par le fait que** l'on dépose sur une face de cette première feuille, après séchage, la puce et l'antenne du dispositif d'identification radiofréquence.

26. Procédé selon l'une des revendications 18 à 25, **caractérisé par le fait que** la première feuille est enduite par un mélange à base polymère, apte au grainage.

27. Procédé selon la revendication 18, **caractérisé par** la fait que l'on dépose par enduction un mélange à base polymère apte au grainage après assemblage des première et deuxième feuilles.

28. Procédé selon l'une des revendications 18 et 27, **caractérisé par le fait que** l'on imprègne la deuxième feuille avec un polymère thermoplastique.

29. Procédé selon la revendication 18, **caractérisé par le fait que** l'on réalise b), la première feuille étant réalisée à partir d'une base fibreuse, de préférence saturée, en polymère, notamment un latex, cette première feuille étant embossée de manière à créer une cavité ayant une forme adaptée à celle de la puce, une deuxième feuille étant réalisée à partir d'une base fibreuse, de préférence saturée par imprégnation ou précipitation en masse avec des résines synthétiques ou naturelles, sur cette deuxième feuille étant déposées une puce et une antenne, cette deuxième feuille étant contrecollée avec la première, de manière à ce que la puce vienne se loger dans la cavité réalisée par l'embossage.

30. Procédé selon l'une quelconque des revendications 18 à 24, **caractérisé par le fait que** la puce et l'antenne sont fixées sur un film de support, notamment un film de polyester, avant d'être associées à une base fibreuse.

## Claims

1. A multilayer structure forming a cover paper for a booklet, in particular a passport, the multilayer structure being folded in accordance with a fold of the cover, the structure including a radiofrequency identification device (31, 32) having a chip (31), the materials constituting the various layers of the multilayer structure being selected, as the thicknesses of said layers, in such a manner that the cover (20) withstands mechanical and thermal shocks, and is capable of being subjected to graining treatment and/ or to decoration treatment by having a film deposited thereon by hot transfer under pressure, and/ or to lamination treatment while depositing security films, the structure including at least one sheet having a fiber base, **characterized by** the fact that the chip is received, without leading to extra thickness, in the thickness of a first layer (26) whose thickness is greater than the thickness of the chip so that the chip is protected from shocks both by the first layer (26) and by a support layer (24), one face of which is covered by the first layer (26), the thickness of the first layer (26) being sufficient to ensure that during a compression of said treatment, the thickness of the first layer (26) is greater than that of the chip (31).

2. A multilayer structure according to the preceding claim, **characterized by** the fact that the chip (31) is situated close to the fold (21).

3. A multilayer structure according to claim 1 or claim 2, **characterized by** the fact that the fiber base is a cellulose blotting paper base or a non-woven fabric.

4. A multilayer structure according to the preceding claim, **characterized by** the fact that the fiber base contains a polymer material selected so as to confer on the multilayer structure firstly properties of resisting tearing and secondly properties of toughness that are sufficient to protect the radiofrequency identification device from mechanical shocks.

5. A multilayer structure according to the preceding claim, **characterized by** the fact that said polymer material is selected from the following list: natural or synthetic rubbers; butadiene styrene rubber; polybutadiene; butadiene/ acrylonitrile copolymers; acrylic polymers; polychloroprene; and mixtures thereof.

6. A multilayer structure according to any preceding claim, **characterized by** the fact that the first layer (26) presents toughness enabling it, in the event of short-term compression, to conserve thickness greater than or equal to the thickness of the chip.

7. A multilayer structure according to claim 6, **characterized by** the fact that the first layer (26) comprises a fiber base.

8. A multilayer structure according to claim 6 or claim 7, **characterized by** the fact that the first layer (26) comprises a polymer material selected in such a manner as to confer on the multilayer structure toughness properties that are sufficient to protect the radiofrequency identification device from mechanical shocks.

9. A multilayer structure according to any preceding claim, **characterized by** the fact that it includes a layer of a polymer-based material that is suitable for graining, in particular a material selected from the following list: PVC-based polymers, optionally plasticized, natural or synthetic elastomers or polyurethanes, optionally including swelling agents, PVC emulsions, and butadiene/ acrylonitrile copolymer or butadiene/ acrylonitrile/ styrene copolymer, and mixtures thereof.

10. A multilayer structure according to any preceding claim, **characterized by** the fact that the radiofrequency identification device includes a silkscreen-printed antenna.

11. A booklet cover including a multilayer structure as defined in any preceding claim.

12. A cover according to the preceding claim, **characterized by** the fact that one face of the support layer (24) is covered by a second layer (25) of material suitable for being grained, the outside surface of the cover (20) presenting graining.

13. A cover according to claim 11 or claim 12, including a color metallized film or a holographic film applied by a decoration operation, in particular by hot transfer under pressure.

14. A cover according to any one of claims 11 to 13, including a printing by photogravure or by silkscreen printing of a pattern that is visible or invisible.

15. A booklet comprising a cover as defined in any one of claims 11 to 14 and a set of sheets (11) having an end paper (12) stuck to the back of the front flap of the cover.

16. A booklet according to the preceding claim, the end paper (12) being the sheet on which variable mentions are printed and being covered by a transparent adhesive film.

17. A booklet according to claim 15 or claim 16, being a passport.

18. A method of manufacturing a multilayer structure as defined in any one of claims 1 to 10, the method comprising the following step:
- placing the radiofrequency identification device on a first sheet; and one of the following steps:
a)- assembling said first sheet on a second sheet in such a manner as to obtain a resultant thickness that is substantially constant, the second sheet being sufficiently compressible at the time of assembly to receive the chip in its thickness, or
b)- laminating said first sheet with a second sheet, the chip of the radiofrequency identification device being situated on the inside of the first sheet, a hole or cavity being formed in the second sheet, said hole or cavity being of a shape that is suitable for receiving the chip, the chip being put into place in said hole or cavity while said sheets are being laminated together, or
c)- making a second sheet with a hole of a shape suitable for containing the chip;
- making a third sheet; and
- laminating together the three sheets so that the second sheet is sandwiched between the first sheet and the third sheet and so that the chip is received in the hole in the second sheet, or
d)- a coating having been made before placing the radiofrequency identification device with a cavity of a shape suitable for containing the chip on the first sheet and the radiofrequency identification device received in the cavity on the first sheet,
- coating the sheet on the side carrying the radiofrequency identification device so as to protect the device, or
e)- depositing a coating on the first sheet to a thickness greater than the thickness of the chip, for steps a) to e) the thickness of the second layer or of the coating being greater than the one of the chip and being sufficient to ensure that during a compression of a treatment of graining and/or decoration by having a film deposited thereon by hot transfer under pressure and/or by rolling while depositing security films, the thickness is greater than the one of the chip.

19. A method according to claim 18, **characterized by** the fact that step b) is performed and that the first sheet also includes a cavity in which the chip is partially received.

20. A method according to either one of the two preceding claims, **characterized by** the fact that the second sheet is made with a hollow watermark (50) of depth greater than the thickness of the chip (31), by the fact that the chip is placed on the first sheet, and by the fact that the second sheet and the first sheet are laminated together in such a manner that the chip (31) is received in the watermark (50).

21. A method according to claim 18, **characterized by** the fact that step e) is performed, the radiofrequency identification device being deposited on one face of the sheet, and that said face of the sheet is coated in a mixture based on a non-gelled liquid resin, with the thickness deposited being greater than the thickness of the chip.

22. A method according to the preceding claim, **characterized by** the fact that the layer deposited by coating is grained after drying.

23. A method according to claim 18, **characterized by** the fact that step e) is performed and that a resin based on a hot-melt component is deposited on the face of the sheet carrying the radiofrequency identification device, the resin being deposited to a thickness that is greater than the thickness of the chip.

24. A method according to the preceding claim, **characterized by** the fact that the coating is marked while hot so as to create graining.

25. A method according to any one of claims 18 to 24, **characterized by** the fact that the first sheet comprises a fiber base, in particular a paper base, by the fact that said fiber base is saturated with a material, in particular an elastomer latex, for providing resistance to tearing and subsequently for protecting the radiofrequency identification device, and by the fact that the chip and the antenna of the radiofrequency identification device are deposited on a face of said first sheet once dry.

26. A method according to any one of claims 18 to 25, **characterized by** the fact that the first sheet is coated with a polymer-based mixture that is suitable for graining.

27. A method according to claim 18, **characterized by** the fact that a polymer-based mixture suitable for graining is deposited after the first and second sheets have been assembled together.

28. A method according to claim 18 or claim 27, **characterized by** the fact that the second sheet is impregnated with a thermoplastic polymer.

29. A method according to claim 18, **characterized by** the fact that step b) is performed, the first sheet being made from a fiber base, preferably saturated in polymer, in particular in a latex, this first sheet being embossed in such a manner as to create a cavity of a shape matching that of the chip, a second sheet being made from a fiber base, preferably saturated with synthetic or natural resins by impregnation or bulk precipitation, a chip and an antenna being deposited on said second sheet, and this second sheet being laminated with the first in such a manner that the chip is received in the cavity made by the embossing.

30. A method according to any one of claims 18 to 24, **characterized by** the fact that the chip and the antenna are fixed on a support film, in particular a polyester film, prior to being associated with a fiber base.

## Patentansprüche

1. Mehrschichtstruktur, die einen Umschlag für ein Heft, insbesondere einen Reisepass, bildet, wobei die Mehrschichtstruktur dazu bestimmt ist, gemäß einem Falz des Umschlags gefaltet zu werden, umfassend eine einen Chip (31) aufweisende Funkfrequenzidentifizierungsvorrichtung (31, 32), wobei die die einzelnen Schichten der Mehrschichtstruktur bildenden Werkstoffe sowie die Dicke dieser Schichten so gewählt sind, dass der Umschlag (20) gegenüber mechanischen und thermischen Stößen beständig ist und einer Behandlung der Körnung und/oder Verzierung durch Auftrag einer Folie durch Wärmeübertragung und unter Druck und/oder der Laminierung bei Aufträgen von Sicherheitsfolien unterzogen werden kann, wobei die Struktur mindestens eine eine Faserbasis aufweisende Schicht umfasst, **dadurch gekennzeichnet, dass** der Chip ohne Erzeugung einer Verdickung in der Dicke einer ersten Schicht (26) untergebracht ist, deren Dicke größer als die des Chips (31) ist, so dass dieser gleichzeitig durch die erste Schicht (26) und durch eine Tragschicht (24) gegen Stöße geschützt ist, von der eine Seite mit der ersten Schicht (26) bedeckt ist, wobei die Dicke der ersten Schicht (26) so groß ist, dass während einer Komprimierung dieser Behandlung eine Dicke beibehalten wird, die größer als die des Chips (31) ist.

2. Mehrschichtstruktur nach dem vorhergehenden Anspruch, **dadurch gekennzeichnet, dass** der Chip (31) in Nähe des Falzes (21) gelegen ist.

3. Mehrschichtstruktur nach einem der Ansprüche 1 und 2, **dadurch gekennzeichnet, dass** die Faserbasis ein Zelluloselöschblatt oder ein Vlies ist.

4. Mehrschichtstruktur nach dem vorhergehenden Anspruch, **dadurch gekennzeichnet, dass** die Faserbasis ein Polymermaterial enthält, das so gewählt ist, dass es der Mehrschichtstruktur einerseits Reißfestigkeitseigenschaften und andererseits Schlagzähigkeitseigenschaften verleiht, die ausreichen, um die Funkfrequenzidentifizierungsvorrichtung vor mechanischen Stößen zu schützen.

5. Mehrschichtstruktur nach dem vorhergehenden Anspruch, **dadurch gekennzeichnet, dass** das Polymermaterial aus der folgenden Liste ausgewählt ist: natürliche oder synthetische Kautschuks, Styrol-Butadien-Kautschuk, Polybutadien, Butadien-Acrylonitril-Copolymere, Acrylpolymere, Polychloropren und ihre Mischungen.

6. Mehrschichtstruktur nach einem der vorhergehenden Ansprüche, **dadurch gekennzeichnet, dass** die erste Schicht (26) eine Schlagzähigkeit aufweist, die ihr gestattet, im Fall einer momentanen Komprimierung eine Dicke beizubehalten, die größer oder gleich der Dicke des Chips ist.

7. Mehrschichtstruktur nach Anspruch 6, **dadurch gekennzeichnet, dass** die erste Schicht (26) eine Faserbasis umfasst.

8. Mehrschichtstruktur nach Anspruch 6 oder 7, **dadurch gekennzeichnet, dass** die erste Schicht (26) ein Polymermaterial umfasst, das so gewählt ist, dass es der Mehrschichtstruktur Schlagzähigkeitseigenschaften verleiht, die ausreichen, um die Funkfrequenzidentifizierungsvorrichtung vor mechanischen Stößen zu schützen.

9. Mehrschichtstruktur nach einem der vorhergehenden Ansprüche, **dadurch gekennzeichnet, dass** sie eine Schicht aus einem für die Körnung geeigneten Material auf Polymerbasis umfasst, das insbesondere aus der folgenden Liste ausgewählt ist: Polymere auf der Basis von PVC, gegebenenfalls plastifiziert, von Polyurethanen oder natürlichen oder synthetischen Elastomeren, gegebenenfalls mit Treibmitteln, Emulsionen aus PVC und Butadien-Acrylonitril-Copolymer oder Butadien-Acrylonitril-Styrol-Copolymer und ihre Mischungen.

10. Mehrschichtstruktur nach einem der vorhergehenden Ansprüche, **dadurch gekennzeichnet, dass** die Funkfrequenzidentifizierungsvorrichtung eine im Siebdruck hergestellte Antenne umfasst.

11. Heftumschlag, umfassend eine Mehrschichtstruktur, wie sie in einem der Ansprüche 1 bis 10 definiert ist.

12. Umschlag nach dem vorhergehenden Anspruch, **dadurch gekennzeichnet, dass** eine Seite der Tragschicht (24) mit einer zweiten Schicht (25) aus einem zur Körnung geeigneten Werkstoff bedeckt ist, wobei die Außenfläche des Umschlags (20) ein Korn aufweist.

13. Umschlag nach einem der Ansprüche 11 und 12, umfassend eine metallisierte gefärbte oder holographische Folie, die durch einen Verzierungsarbeitsgang, insbesondere durch Wärmeübertragung und unter Druck, aufgebracht ist.

14. Umschlag nach einem der Ansprüche 11 bis 13, umfassend einen Aufdruck eines sichtbaren oder unsichtbaren Musters durch Heliogravüre oder Siebdruck.

15. Heft, umfassend einen Umschlag, wie er in einem der Ansprüche 11 bis 14 definiert ist, und eine Einheit von Blättern (11) mit einem Deckblatt (12), das auf die Rückseite der vorderen Klappe des Umschlags geklebt ist.

16. Heft nach dem vorhergehenden Anspruch, wobei das Deckblatt (12) dazu bestimmt ist, einen Aufdruck von variablen Einträgen aufzunehmen und mit einer transparenten Klebefolie bedeckt zu werden.

17. Heft nach einem der Ansprüche 15 und 16, wobei es ein Reisepass ist.

18. Verfahren zur Herstellung einer Mehrschichtstruktur, wie sie in einem der Ansprüche 1 bis 10 definiert ist, umfassend den folgenden Schritt:
- die Funkfrequenzidentifizierungsvorrichtung auf einer ersten Folie anordnen, und einen der folgenden Schritte:
a) - diese erste Folie mit einer zweiten Folie so zusammenfügen, dass man eine resultierende, im Wesentlichen konstante Dicke erhält, wobei die zweite Folie zum Zeitpunkt der Zusammenfügung ausreichend komprimierbar ist, um den Chip in seiner Dicke aufzunehmen, oder
b) - diese erste Folie mit einer zweiten Folie kaschieren, wobei der Chip der Funkfrequenzidentifizierungsvorrichtung auf der Innenseite der ersten Folie gelegen ist, wobei auf der zweiten Folie ein Loch oder ein Hohlraum gebildet ist, wobei dieses Loch oder dieser Hohlraum eine Form besitzt, die dafür ausgelegt ist, den Chip aufzunehmen, wobei der Chip bei der Kaschierung dieser Folien in das Loch oder den Hohlraum eingesetzt wird, oder
c) - eine zweite Folie mit einem Loch bilden, das eine Form besitzt, die dafür ausgelegt ist, den Chip zu enthalten,
- eine dritte Folie herstellen,
- die drei Folien durch Kaschieren so zusammenfügen, dass die zweite Folie sandwichartig zwischen der ersten Folie und der dritten Folie angeordnet ist und dass der Chip in dem Loch der zweiten Folie untergebracht ist, oder
d) - wenn vor dem Einsetzen der Funkfrequenzidentifizierungsvorrichtung eine Beschichtung mit einer Aussparung in Form eines Hohlraums hergestellt wurde, der eine Form besitzt, die dafür ausgelegt ist, den Chip auf der ersten Folie zu enthalten und die Funkfrequenzidentifizierungsvorrichtung in diesem Hohlraum auf der ersten Folie zu enthalten,
- eine Beschichtung auf der Folie auf der Seite der Funkfrequenzidentifizierungsvorrichtung herstellen, so dass diese geschützt wird, oder
e) - auf der ersten Folie eine Beschichtung auftragen, die größer als die Dicke des Chips ist,
wobei in den Schritten a) bis e) die Dicke der zweiten Folie oder der Beschichtung größer als diejenige des Chips ist und ausreichend groß ist, um während einer Komprimierung einer Behandlung der Körnung und/oder der Verzierung durch Auftrag einer Folie durch Wärmeübertragung und unter Druck und/oder der Laminierung bei Aufträgen von Sicherheitsfolien eine Dicke zu behalten, die größer als die des Chips ist.

19. Verfahren nach dem vorhergehenden Anspruch, **dadurch gekennzeichnet, dass** man b) ausführt und dass die erste Folie ebenfalls einen Hohlraum umfasst, in dem der Chip teilweise untergebracht wird.

20. Verfahren nach einem der beiden vorhergehenden Ansprüche, **dadurch gekennzeichnet, dass** man die zweite Folie mit einem vertieften Wasserzeichen (50) herstellt, dessen Tiefe größer als die Dicke des Chips (31) ist, dass man den Chip auf der ersten Folie anordnet und dass man die zweite Folie mit der ersten Folie so kaschiert, dass der Chip (31) in dem Wasserzeichen (50) aufgenommen ist.

21. Verfahren nach Anspruch 18, **dadurch gekennzeichnet, dass** man e) durchführt, wobei die Funkfrequenzidentifizierungsvorrichtung auf einer Seite der Folie aufgelegt wird, und dass diese Seite der Folie mit einer Mischung auf Basis eines nicht gelierten flüssigen Harzes beschichtet wird, wobei die aufgetragene Dicke größer als die des Chips ist.

22. Verfahren nach dem vorhergehenden Anspruch, **dadurch gekennzeichnet, dass** die durch Beschichtung aufgetragene Schicht nach Trocknung gekörnt wird.

23. Verfahren nach Anspruch 18, **dadurch gekennzeichnet, dass** man e) durchführt und dass man auf der die Funkfrequenzidentifizierungsvorrichtung tragenden Seite der Folie ein Harz auf Basis einer warmschmelzenden Verbindung aufträgt, wobei die aufgetragene Dicke größer als die Dicke des Chips ist.

24. Verfahren nach dem vorhergehenden Anspruch, **dadurch gekennzeichnet, dass** man die Beschichtung warm prägt, um ein Korn zu erzeugen.

25. Verfahren nach einem der Ansprüche 18 bis 24, **dadurch gekennzeichnet, dass** die erste Folie eine Faserbasis, insbesondere eine Papierbasis, umfasst, dass man diese Faserbasis mit einem Werkstoff, insbesondere einem Elastomerlatex, sättigt, der es gestattet, die Reißfestigkeit und den späteren Schutz der Funkfrequenzidentifizierungsvorrichtung zu gewährleisten, und dass man auf einer Seite dieser ersten Folie nach Trocknung den Chip und die Antenne der Funkfrequenzidentifizierungsvorrichtung auflegt.

26. Verfahren nach einem der Ansprüche 18 bis 25, **dadurch gekennzeichnet, dass** die erste Folie mit einer für die Körnung geeigneten Mischung auf Polymerbasis beschichtet wird.

27. Verfahren nach Anspruch 18, **dadurch gekennzeichnet, dass** man durch Beschichtung eine Mischung auf Polymerbasis aufträgt, die für die Körnung geeignet ist, und zwar nach Zusammenfügung der ersten und der zweiten Folie.

28. Verfahren nach einem der Ansprüche 18 und 27, **dadurch gekennzeichnet, dass** man die zweite Folie mit einem thermoplastischen Polymer tränkt.

29. Verfahren nach Anspruch 18, **dadurch gekennzeichnet, dass** man b) ausführt, wobei die erste Folie ausgehend von einer vorzugsweise mit Polymer, insbesondere einem Latex, gesättigten Faserbasis hergestellt ist, wobei diese erste Folie so geprägt ist, dass ein Hohlraum geschaffen wird, der eine an die Form des Chips angepasste Form besitzt, wobei eine zweite Folie ausgehend von einer Faserbasis hergestellt wird, die vorzugsweise durch Tränken oder Ausfällen in der Masse mit synthetischen oder natürlichen Harzen gesättigt ist, wobei auf dieser zweiten Folie ein Chip und eine Antenne aufgebracht sind, wobei diese zweite Folie mit der ersten Folie kaschiert wird, so dass der Chip in dem durch die Prägung geschaffenen Hohlraum untergebracht wird.

30. Verfahren nach einem der Ansprüche 18 bis 24, **dadurch gekennzeichnet, dass** der Chip und die Antenne auf einer Tragfolie, insbesondere einer Polyesterfolie, befestigt werden, bevor sie mit einer Faserbasis kombiniert werden.
